# EUROPEAN PATENT APPLICATION

(11) **EP 4 564 186 A1**
(43) Date of publication of application: **04.06.2025**
(21) Application number: 23846267.5
(22) Date of filing: 14.07.2023
(51) Int. Cl.: G06F 15/78, G06F 1/24, G06F 13/38, G06F 13/42

(54) **COMMUNICATION SYSTEM, COMMUNICATION METHOD, AND PROGRAM**

(30) Priority: 29.07.2022 JP 2022121754
(71) Applicant: Sony Semiconductor Solutions Corporation, Atsugi-shi, Kanagawa 243-0014 (JP)
(72) Inventor: KAWANISHI Kohei, Atsugi-shi, Kanagawa 243-0014 (JP); YUBA Tadaaki, Atsugi-shi, Kanagawa 243-0014 (JP)
(74) Representative: MFG Patentanwälte Meyer-Wildhagen Meggle-Freund Gerhard PartG mbB
(86) International application number: PCT/JP2023/025994
(87) International publication number: WO 2024/024536

(57) **Abstract**

The present disclosure relates to a communication system, a communication method, and a program that achieve a more appropriate reset operation.

The communication system includes a controller device that manages communication in the communication system and a target device that performs communication under the management of the controller device. Then, the target device includes a pattern interpretation unit that determines whether or not a target reset pattern has been received, the target reset pattern being transmitted from the controller device through a data communication line and instructing first reset release after the target device is powered on, and a reset control unit that performs control to release a reset state of the target device in a case where the target reset pattern is determined to have been received. The present technology can be applied to, for example, a communication system that performs communication in accordance with the I3C specifications.

## Description

### TECHNICAL FIELD

The present disclosure relates to a communication system, a communication method, and a program, and more particularly, to a communication system, a communication method, and a program that achieve a more appropriate reset operation.

### BACKGROUND ART

Improved inter integrated circuits (I3C), which is a serial communication interface, has been standardized by the Mobile Industry Processor Interface (MIPI) Alliance. For example, in I3C, a reset operation (Target Reset) that is performed by a controller device on a target device after communication in accordance with the I3C specifications is enabled

Furthermore, Patent Document 1 discloses a numerical control system that monitors a serial communication signal transmitted from a numerical control device, determines that the supply of power to the numerical control device is interrupted on the basis of the fact that the serial signal has stopped for at least a predetermined period of time, and outputs a reset signal to a register inside an I/O unit.

### CITATION LIST

### PATENT DOCUMENT

Patent Document 1: Japanese Patent Application Laid-Open No. 2016-133877

### SUMMARY OF THE INVENTION

### PROBLEMS TO BE SOLVED BY THE INVENTION

It is necessary for the existing I3C to use a reset line to perform the first reset release after the target device is activated, and it is therefore required to realize a reset operation without the need for the reset line. Furthermore, to prevent the reset operation from being performed due to unintended noise, it is required to improve noise resistance.

The present disclosure has been made in view of such circumstances, and it is therefore object of the present disclosure to achieve a more appropriate reset operation.

### SOLUTIONS TO PROBLEMS

A communication system according to one aspect of the present disclosure includes: a controller device that manages communication in the communication system; and a target device that performs communication under the management of the controller device, in which the target device includes: a pattern interpretation unit that determines whether or not a target reset pattern has been received, the target reset pattern being transmitted from the controller device through a data communication line and instructing first reset release after the target device is powered on; and a reset control unit that performs control to release a reset state of the target device in a case where the target reset pattern is determined to have been received.

A communication method or program according to one aspect of the present disclosure includes, in a communication system including a controller device that manages communication in the communication system, and a target device that performs communication under the management of the controller device: determining whether or not a target reset pattern has been received, the target reset pattern being transmitted from the controller device through a data communication line and instructing first reset release after the target device is powered on; and performing control to release a reset state of the target device in a case where the target reset pattern is determined to have been received.

According to one aspect of the present disclosure, whether or not the target reset pattern has been received is determined, the target reset pattern being transmitted from the controller device through the data communication line and instructing the first reset release after the target device is powered on, and control to release the reset state of the target device is performed in a case where the target reset pattern is determined to have been received.

### BRIEF DESCRIPTION OF DRAWINGS

Fig. 1 is a block diagram illustrating a configuration example of a first embodiment of a communication system to which the present technology is applied.
Fig. 2 is a diagram for describing a wiring configuration of a communication system that performs communication through a typical Bus line.
Fig. 3 is a diagram for describing a wiring configuration of a communication system that performs communication in accordance with the I3C specifications.
Fig. 4 is a flowchart for describing reset release processing.
Fig. 5 is a block diagram illustrating a configuration example of a second embodiment of the communication system to which the present technology is applied.
Fig. 6 is a diagram illustrating an example of a reset action command packet structure.
Fig. 7 is a flowchart for describing reset release processing.
Fig. 8 is a block diagram illustrating a configuration example of a third embodiment of the communication system to which the present technology is applied.
Fig. 9 is a flowchart for describing a first processing example of reset state control processing.
Fig. 10 is a flowchart for describing a second processing example of the reset state control processing.
Fig. 11 is a block diagram illustrating a configuration example of a fourth embodiment of the communication system to which the present technology is applied.
Fig. 12 is a diagram illustrating an example of association between a return time and data indicating the return time.
Fig. 13 is a flowchart for describing reset state control processing.
Fig. 14 is a block diagram illustrating a configuration example of an embodiment of a computer to which the present technology is applied.

### MODE FOR CARRYING OUT THE INVENTION

Hereinafter, specific embodiments to which the present technology is applied will be described in detail with reference to the drawings.

### <First configuration example of communication system>

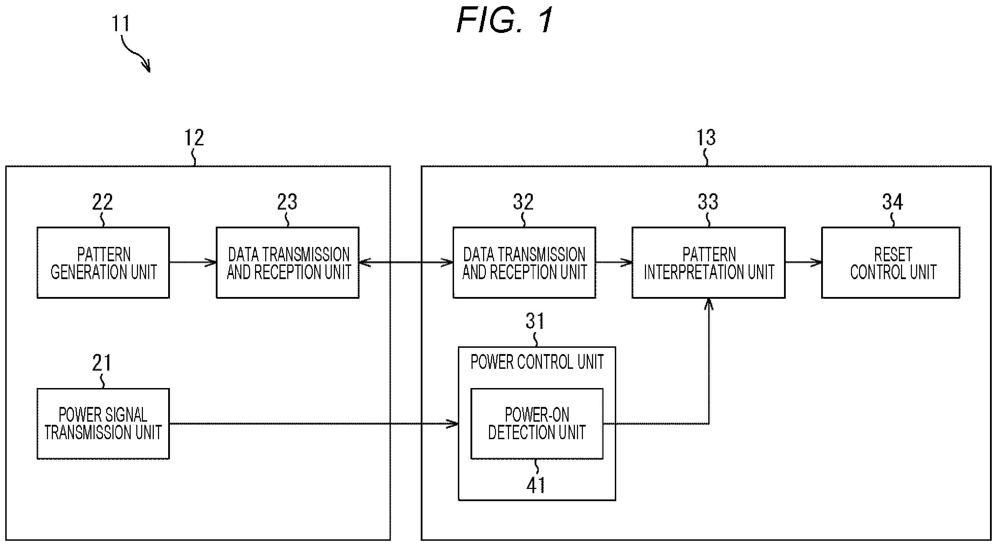

Fig. 1 is a block diagram illustrating a configuration example of a first embodiment of a communication system to which the present technology is applied.

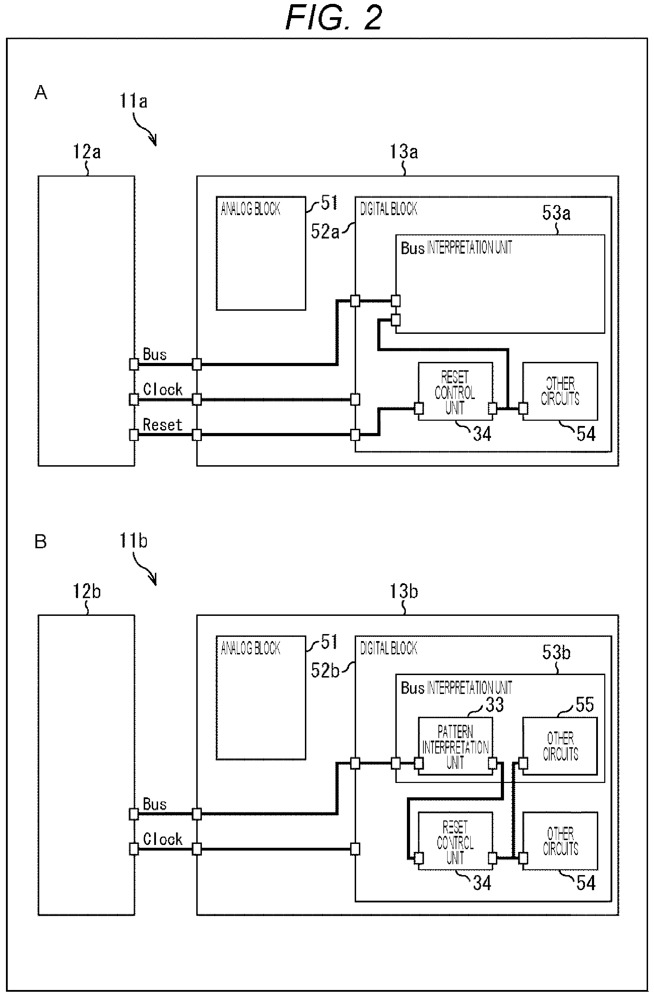

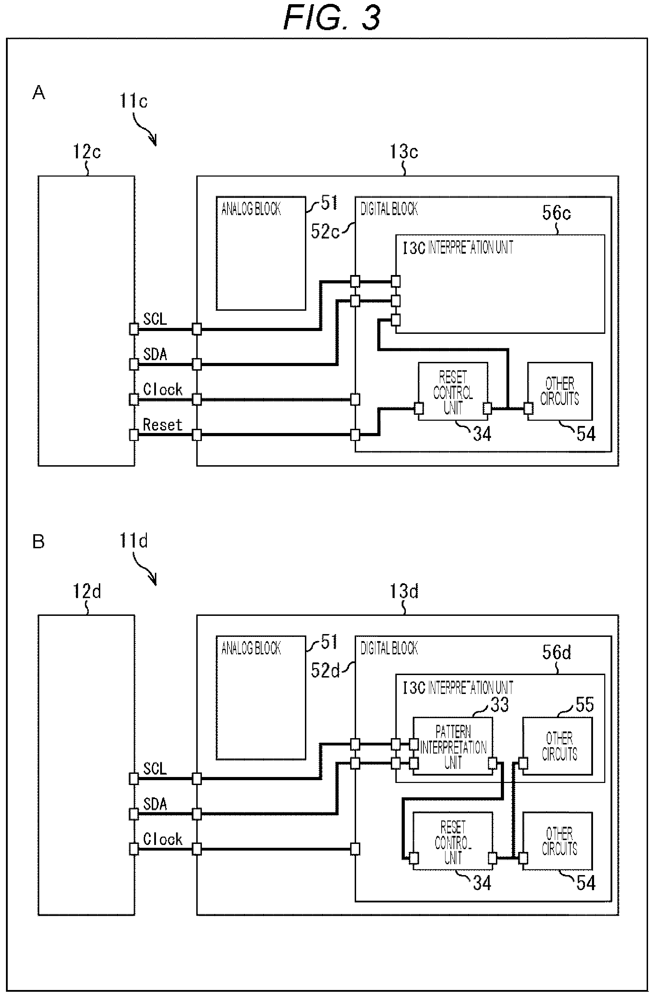

As illustrated in Fig. 1, the communication system 11 includes a controller device 12 that manages communication in the communication system 11 and a target device 13 that performs communication under the management of the controller device 12, the controller device 12 and the target device 13 being connected through a data communication line (for example, a Bus line illustrated in Fig. 2, an SCL line and an SDA line illustrated in Fig. 3, and the like).

The controller device 12 includes a power signal transmission unit 21, a pattern generation unit 22, and a data transmission and reception unit 23. The target device 13 includes a power control unit 31, a data transmission and reception unit 32, a pattern interpretation unit 33, and a reset control unit 34.

The power signal transmission unit 21 supplies, to the target device 13, a power-on signal or a power-off signal that instructs switching of power on/off of the target device 13.

The pattern generation unit 22 generates data indicating a target reset pattern that instructs reset release of the target device 13, and supplies the data to the data transmission and reception unit 23. For example, the pattern generation unit 22 generates the target reset pattern when the instruction of the first reset release after the target device 13 is powered on is given or when the reset release instruction is given to the target device 13 maintaining the reset state on the basis of timing determined by the controller device 12.

The data transmission and reception unit 23 transmits and receives data to and from the data transmission and reception unit 32 of the target device 13 through the data communication line. For example, the data transmission and reception unit 23 transmits, to the target device 13, the data indicating the target reset pattern supplied from the pattern generation unit 22.

The power control unit 31 controls the power on/off of the target device 13 in accordance with the power-on signal or the power-off signal supplied from the power signal transmission unit 21. Furthermore, the power control unit 31 includes a power-on detection unit 41 including an analog circuit that detects the power-on of the target device 13. When detecting the power-on of the target device 13, the power-on detection unit 41 supplies, to the pattern interpretation unit 33, an initialization signal that instructs the pattern interpretation unit 33 to set the state to an initial value.

The data transmission and reception unit 32 transmits and receives data to and from the data transmission and reception unit 23 of the controller device 12 through the data communication line, and upon receipt of the data transmitted from the data transmission and reception unit 23, supplies the data to the pattern interpretation unit 33. For example, the data transmission and reception unit 32 receives the data indicating the target reset pattern transmitted from the data transmission and reception unit 23 and supplies the data to the pattern interpretation unit 33.

The pattern interpretation unit 33 interprets the data supplied from the data transmission and reception unit 32 after setting the state to the initial value in accordance with the initialization signal supplied from the power-on detection unit 41. For example, in a case where the data supplied from the data transmission and reception unit 32 is interpreted as the target reset pattern, the pattern interpretation unit 33 instructs the reset control unit 34 to perform the reset release.

The reset control unit 34 performs control to release the reset of circuits (for example, other circuits 54 and other circuits 55 in Figs. 2 and 3, and the like) included in a digital block of the target device 13 in accordance with the reset release instruction from the pattern interpretation unit 33.

The communication system 11 is configured as described above, and the target reset pattern that instructs the first reset release after the target device 13 is powered on is transmitted from the controller device 12 to the target device 13 through the data communication line. This configuration allows the target device 13 to perform the first reset release after activation in response to reception of the target reset pattern. Therefore, for example, the existing communication system requires a Reset line that is used to transmit a reset release signal, whereas the communication system 11 can have a wiring configuration that eliminates the need for the Reset line by using the target reset pattern.

A wiring configuration of the communication system 11 where the controller device 12 and the target device 13 communicate through a typical Bus line will be described with reference to Fig. 2.

A of Fig. 2 illustrates a block diagram including a wiring configuration of an existing communication system 11a, and B of Fig. 2 illustrates a block diagram including a wiring configuration of a communication system 11b to which the present technology is applied.

For example, as illustrated in A of Fig. 2, the existing communication system 11a has a wiring configuration where a controller device 12a and a target device 13a are connected through a Bus line, a Clock line, and a Reset line. The target device 13a includes an analog block 51 and a digital block 52a, and the Bus line, the Clock line, and the Reset line are connected to the digital block 52a. The digital block 52a includes a reset control unit 34, a Bus interpretation unit 53a, and other circuits 54, the Reset line is connected to the reset control unit 34, the Bus line is connected to the Bus interpretation unit 53a, and the reset control unit 34, the Bus interpretation unit 53a, and the other circuits 54 are connected.

In the existing communication system 11a configured as described above, the controller device 12a transmits the reset release signal to the target device 13a through the Reset line. Then, in the target device 13a, the reset control unit 34 controls the Bus interpretation unit 53a and the other circuits 54 to release the reset in accordance with the reset release signal, thereby releasing the reset in the digital block 52a.

On the other hand, as illustrated in B of Fig. 2, the communication system 11b to which the present technology is applied has a wiring configuration where a controller device 12b and a target device 13b are connected through the Bus line and the Clock line. The target device 13b includes the analog block 51 and a digital block 52b, and the Bus line and the Clock line are connected to the digital block 52b. The digital block 52b includes a reset control unit 34, a Bus interpretation unit 53b, and other circuits 54, and the Bus interpretation unit 53b includes a pattern interpretation unit 33 and other circuits 55. Furthermore, in the digital block 52b, the Bus line is connected to the pattern interpretation unit 33 of the Bus interpretation unit 53b, the pattern interpretation unit 33 and the reset control unit 34 are connected, and the reset control unit 34, the other circuits 54, and the other circuits 55 are connected.

In the communication system 11b configured as described above, the controller device 12b transmits data indicating the target reset pattern to the target device 13b through the Bus line. Then, in the target device 13b, the pattern interpretation unit 33 instructs the reset control unit 34 to perform the reset release in accordance with the data indicating the target reset pattern, and the reset control unit 34 performs control to release the reset of the other circuits 54 and the other circuits 55, thereby releasing the reset in the digital block 52b.

Referring to Fig. 3, a wiring configuration of the communication system 11 where the controller device 12 and the target device 13 perform communication in accordance with the I3C specifications standardized by the MIPI Alliance will be described. In I3C, communication is performed through the SCL line used to transmit serial clock and the SDA line used to transmit serial data.

A of Fig. 3 illustrates a block diagram including a wiring configuration of the existing communication system 11c, and B of Fig. 3 illustrates a block diagram including a wiring configuration of the communication system 11d to which the present technology is applied.

For example, as illustrated in A of Fig. 3, the existing communication system 11c has a wiring configuration where a controller device 12c and a target device 13c are connected through the SCL line, the SDA line, the Clock line, and the Reset line. The target device 13c includes the analog block 51 and a digital block 52c, and the SCL line, the SDA line, the Clock line, and the Reset line are connected to the digital block 52c. The digital block 52c includes the reset control unit 34, an I3C interpretation unit 56c, and the other circuits 54, the Reset line is connected to the reset control unit 34, the SCL line the SDA line are connected to the I3C interpretation unit 56c, and the reset control unit 34, the I3C interpretation unit 56c, and the other circuits 54 are connected.

In the existing communication system 11c configured as described above, the controller device 12c transmits the reset release signal to the target device 13c through the Reset line. Then, in the target device 13c, the reset control unit 34 controls the I3C interpretation unit 56c and the other circuits 54 to release the reset in accordance with the reset release signal, thereby releasing the reset in the digital block 52c.

For example, as illustrated in B of Fig. 3, the communication system 11d to which the present technology is applied has a wiring configuration where a controller device 12d and a target device 13d are connected through the SCL line, the SDA line, and the Clock line. The target device 13d includes the analog block 51 and a digital block 52d, and the SCL line, the SDA line, and the Clock line are connected to the digital block 52d. The digital block 52d includes the reset control unit 34, an I3C interpretation unit 56d, and the other circuits 54, and the I3C interpretation unit 56d includes the pattern interpretation unit 33 and the other circuits 55. Furthermore, in the digital block 52d, the SCL line, the SDA line are connected to the pattern interpretation unit 33 of the I3C interpretation unit 56d, the pattern interpretation unit 33 and the reset control unit 34 are connected, and the reset control unit 34, the other circuits 54, and the other circuits 55 are connected.

In the communication system 11d configured as described above, the controller device 12d transmits data indicating the target reset pattern to the target device 13d through the SCL line and the SDA line. Then, in the target device 13d, the pattern interpretation unit 33 instructs the reset control unit 34 to perform the reset release in accordance with the data indicating the target reset pattern, and the reset control unit 34 performs control to release the reset of the other circuits 54 and the other circuits 55, thereby releasing the reset in the digital block 52d.

As described with reference to Figs. 2 and 3, the existing communication systems 11a and 11c each have a wiring configuration that requires the Reset line used to transmit the reset release signal. On the other hand, the communication systems 11b and 11d to which the present technology is applied each include the pattern interpretation unit 33 that interprets the target reset pattern, which eliminates the need for the Reset line and allows for a more appropriate reset operation. Furthermore, for example, in the communication system 11d, the target reset pattern used for I3C can be used for the first reset release after the activation of the target device 13d, and can be used as an alternative to Reset control.

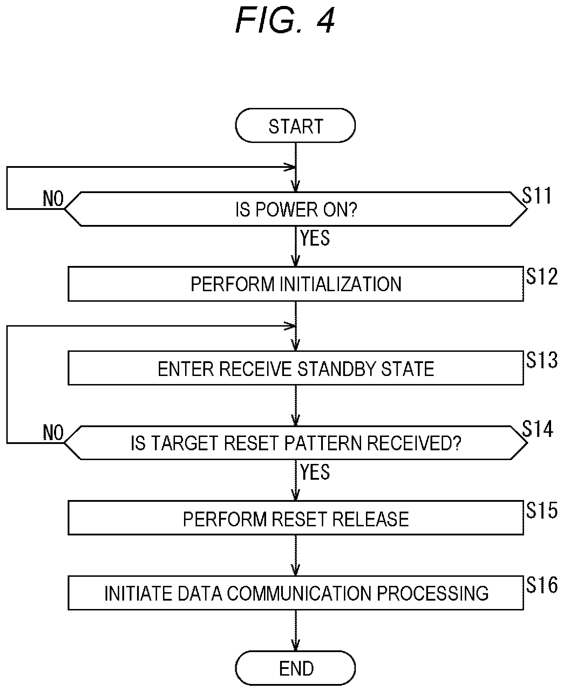

A processing example of reset release processing that is performed by the target device 13 in Fig. 1 will be described with reference to the flowchart illustrated in Fig. 4.

In step S11, the power-on detection unit 41 determines whether or not the target device 13 is powered on, and the processing remains in standby mode until the power-on detection unit 41 determines that the target device 13 is powered on. For example, when the power signal transmission unit 21 of the controller device 12 transmits the power-on signal to the target device 13, and the power control unit 31 powers on the target device 13 in accordance with the power-on signal, the power-on detection unit 41 determines that the target device 13 is powered on, and the processing proceeds to step S12.

In step S12, the power-on detection unit 41 supplies, to the pattern interpretation unit 33, the initialization signal that instructs the pattern interpretation unit 33 to set the state to the initial value, and the pattern interpretation unit 33 sets the state to the initial value in accordance with the initialization signal.

In step S13, the target device 13 enters a receive standby state to wait for data to be transmitted from the controller device 12. Then, when the data transmission and reception unit 32 receives the data transmitted from the controller device 12 and supplies the data to the pattern interpretation unit 33, the processing proceeds to step S14.

In step S14, the pattern interpretation unit 33 interprets the data supplied from the data transmission and reception unit 32 and determines whether or not the target reset pattern has been received. For example, when the data transmission and reception unit 23 transmits, to the target device 13, data indicating the target reset pattern generated by the pattern generation unit 22 of the controller device 12, and the data transmission and reception unit 32 receives the data indicating the target reset pattern and supplies the data to the pattern interpretation unit 33, the pattern interpretation unit 33 determines that the target reset pattern has been received.

In step S14, in a case where the pattern interpretation unit 33 determines that the target reset pattern has not been received, the processing returns to step S13, and the target device 13 remains in the receive standby state.

On the other hand, in step S14, in a case where the pattern interpretation unit 33 determines that the target reset pattern has been received, the processing proceeds to step S15.

In step S15, the pattern interpretation unit 33 instructs the reset control unit 34 to perform the reset release, and the reset control unit 34 performs control to release the reset of the circuits included in the digital block of the target device 13.

As described above, after the first reset release of the target device 13 is performed, the processing proceeds to step S16, and data communication processing is initiated in the communication system 11. For example, communication in accordance with the I3C specifications is enabled, and various types of data communication processing (for example, Target Reset Operations Flow, etc.) are performed. Thereafter, the reset release processing is brought to an end.

As described above, the communication system 11 can perform the first reset release after the target device 13 is powered on by using the target reset pattern, and can expand the range of the reset control based on the target reset pattern as compared with the related art.

### <Second configuration example of communication system>

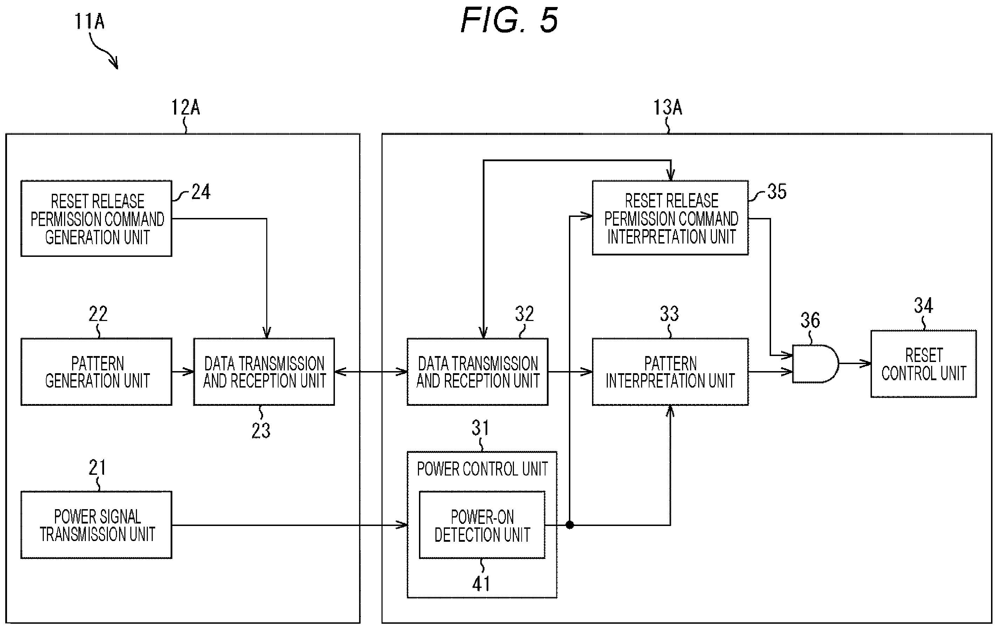

Fig. 5 is a block diagram illustrating a configuration example of a second embodiment of the communication system to which the present technology is applied. Note that, in a communication system 11A illustrated in Fig. 5, components common to those of the communication system 11 in Fig. 1 are denoted by the same reference numerals, and a detailed description thereof will be omitted.

As illustrated in Fig. 5, the communication system 11A includes a controller device 12A and a target device 13A, the controller device 12A and the target device 13A being connected through a data communication line.

Similarly to the controller device 12 in Fig. 1, the controller device 12A includes the power signal transmission unit 21, the pattern generation unit 22, and the data transmission and reception unit 23, and further includes a reset release permission command generation unit 24. Similarly to the target device 13 in Fig. 1, the target device 13A includes the power control unit 31, the data transmission and reception unit 32, the pattern interpretation unit 33, and the reset control unit 34, and further includes a reset release permission command interpretation unit 35 and a reset determination processing unit 36.

The reset release permission command generation unit 24 generates data indicating a reset release permission command that instructs permission for the first reset release after the target device 13 is powered on, and supplies the data to the data transmission and reception unit 23.

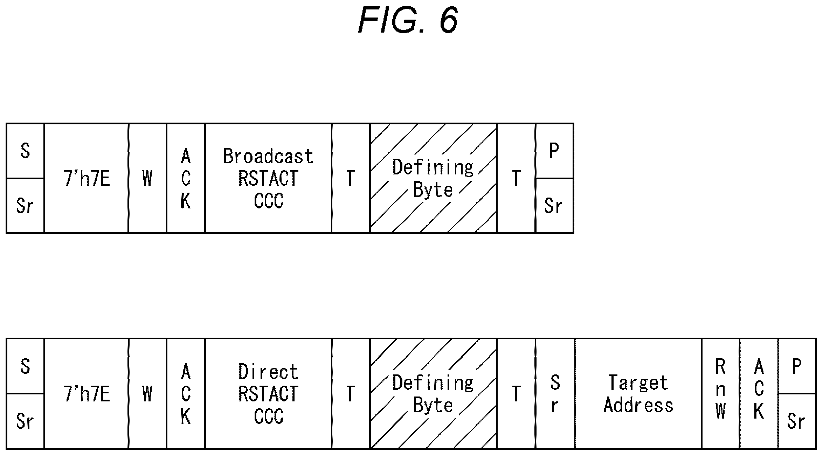

Here, in I3C, a reset action command (RSTACT CCC) that instructs various reset operations is used, and a reset operation is specified by a value of a defining byte (see Fig. 6) of the reset action command. For example, to instruct a reset operation that permits the first reset release after the target device 13 is powered on, the value of the defining byte of the reset action command may be defined as 0x02. Therefore, the reset release permission command generation unit 24 generates, as the reset release permission command, a reset action command having 0x02 set as the value of the defining byte, and supplies the data to the data transmission and reception unit 23. Then, the data indicating the reset release permission command is transmitted to the target device 13A via the data transmission and reception unit 23, received by the data transmission and reception unit 32, and supplied to the reset release permission command interpretation unit 35.

The reset release permission command interpretation unit 35 interprets the data supplied from the data transmission and reception unit 32 after setting the state to the initial value in accordance with the initialization signal supplied from the power-on detection unit 41, in a manner similar to the pattern interpretation unit 33. For example, in a case where the reset release permission command interpretation unit 35 interprets the data supplied from the data transmission and reception unit 32 as the reset action command, the reset release permission command interpretation unit 35 notifies the reset determination processing unit 36 that the reset action command has been received. Moreover, in a case where the defining byte of the reset action command indicates 0x02, that is, in a case where the reset action command is the reset release permission command, the reset release permission command interpretation unit 35 notifies the reset determination processing unit 36 that the reset action command is the reset release permission command.

The reset determination processing unit 36 determines whether or not the first reset release after the target device 13 is powered on is performed on the basis of the reset release instruction from the pattern interpretation unit 33 and the notification (the notification of reception of the reset action command and the notification of the reset release permission command) from the reset release permission command interpretation unit 35. Then, in a case where the reset determination processing unit 36 determines to perform the first reset release after the target device 13 is powered on, the reset determination processing unit 36 instructs the reset control unit 34 to perform the reset release.

For example, in a case where the target reset pattern has been received subsequent to the reception of the reset action command and the reset action command is the reset release permission command, the reset determination processing unit 36 determines to perform the first reset release after the target device 13 is powered on.

On the other hand, in a case where the reset action command has not been received, the reset determination processing unit 36 determines not to perform the first reset release after the target device 13 is powered on even if the target reset pattern has been received. Furthermore, in a case where another command (for example, a start command or the like) has been received subsequent to the reception of the reset action command, the reset determination processing unit 36 determines not to perform the first reset release after the target device 13 is powered on. For example, even in a case where the target reset pattern has been received subsequent to the reception of the reset action command, unless the reset action command is the reset release permission command, the reset determination processing unit 36 determines not to perform the first reset release after the target device 13 is powered on.

The communication system 11A is configured as described above, and for example, in a case where the target reset pattern has been received even with no reset action command received, the target reset pattern can be regarded as a false detection due to noise, preventing the reset release from being performed. That is, the communication system 11A can further improve noise resistance.

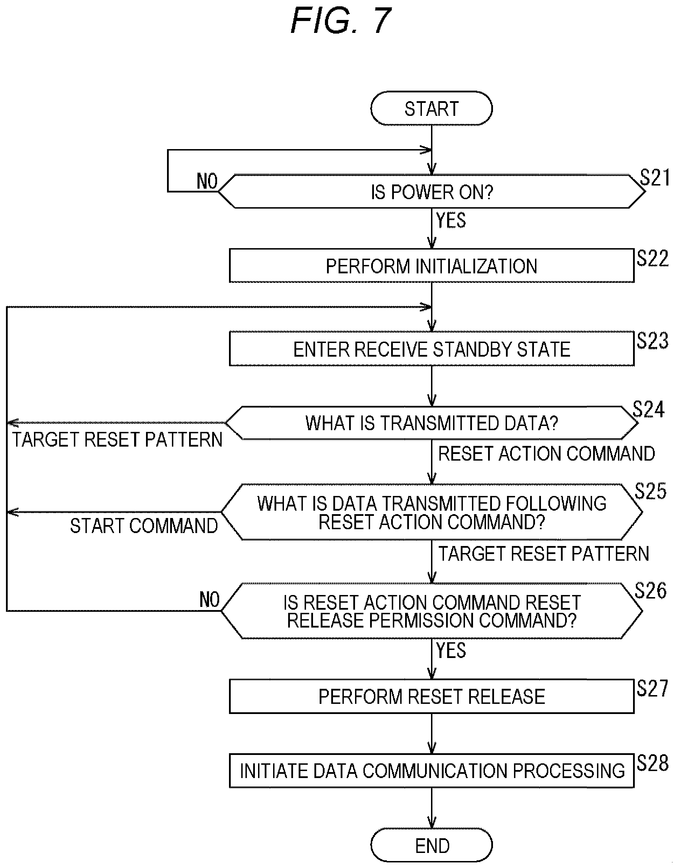

A processing example of the reset release processing that is performed by the target device 13A in Fig. 5 will be described with reference to the flowchart illustrated in Fig. 7.

In steps S21 to S23, processes similar to steps S11 to S13 in Fig. 4 are performed, and when the data transmission and reception unit 32 receives the data transmitted from the controller device 12 and supplies the data to the pattern interpretation unit 33 and the reset release permission command interpretation unit 35, the processing proceeds to step S24.

In step S24, the reset determination processing unit 36 determines whether the data transmitted from the controller device 12 is the target reset pattern or the reset action command. For example, in response to the notification of the reception of the target reset pattern from the pattern interpretation unit 33, the reset determination processing unit 36 can determine that the data transmitted from the controller device 12 is the target reset pattern. Furthermore, in response to the notification of the reception of the reset action command from the reset release permission command interpretation unit 35, the reset determination processing unit 36 can determine that the data transmitted from the controller device 12 is the reset action command.

In step S24, in a case where the reset determination processing unit 36 determines that the pattern interpretation unit 33 has received the target reset pattern, the processing returns to step S23, and subsequently, similar processing is repeated. That is, in a case where the target reset pattern has been received even though the reset action command has not been received, the receive standby state is maintained without performing the reset release.

On the other hand, in step S24, in a case where the reset determination processing unit 36 determines that the reset release permission command interpretation unit 35 has received the reset action command, the processing proceeds to step S25.

In step S25, the reset determination processing unit 36 determines whether the data transmitted from the controller device 12 following the reset action command is the start command or the target reset pattern.

In step S25, in a case where the reset determination processing unit 36 determines that the data transmitted from the controller device 12 following the reset action command is the start command, the processing returns to step S23, and subsequently, similar processing is repeated. That is, in a case where the target reset pattern has not been transmitted from the controller device 12 following the reset action command, the receive standby state is maintained without performing the reset release.

On the other hand, in step S25, in a case where the reset determination processing unit 36 determines that the data transmitted from the controller device 12 following the reset action command is the target reset pattern, the processing proceeds to step S26.

In step S26, the reset determination processing unit 36 determines whether or not the reset action command transmitted from the controller device 12 is the reset release permission command. For example, in a case where the reset action command is the reset release permission command, that is, in a case where the defining byte of the reset action command indicates 0x02, the reset release permission command interpretation unit 35 notifies the reset determination processing unit 36 that the reset action command is the reset release permission command, allowing the reset determination processing unit 36 to determine that the reset action command is the reset release permission command.

In step S26, in a case where the reset determination processing unit 36 determines that the reset action command is not the reset release permission command, the processing returns to step S23, and subsequently, similar processing is repeated. That is, in a case where the reset release permission command has not been transmitted from the controller device 12, the reset release of the target device 13 is not permitted by the controller device 12, so that the receive standby state is maintained without performing the reset release.

On the other hand, in step S26, in a case where the reset determination processing unit 36 determines that the reset action command is the reset release permission command, the processing proceeds to step S27.

In steps S27 and S28, processes similar to steps S15 and S16 in Fig. 4 are performed.

As described above, only in a case where the target reset pattern has been received subsequent to the reception of the reset action command, and the reset action command is the reset release permission command, the communication system 11A performs the first reset release after the target device 13 is powered on, which allows for an improvement of noise resistance.

### <Third configuration example of communication system>

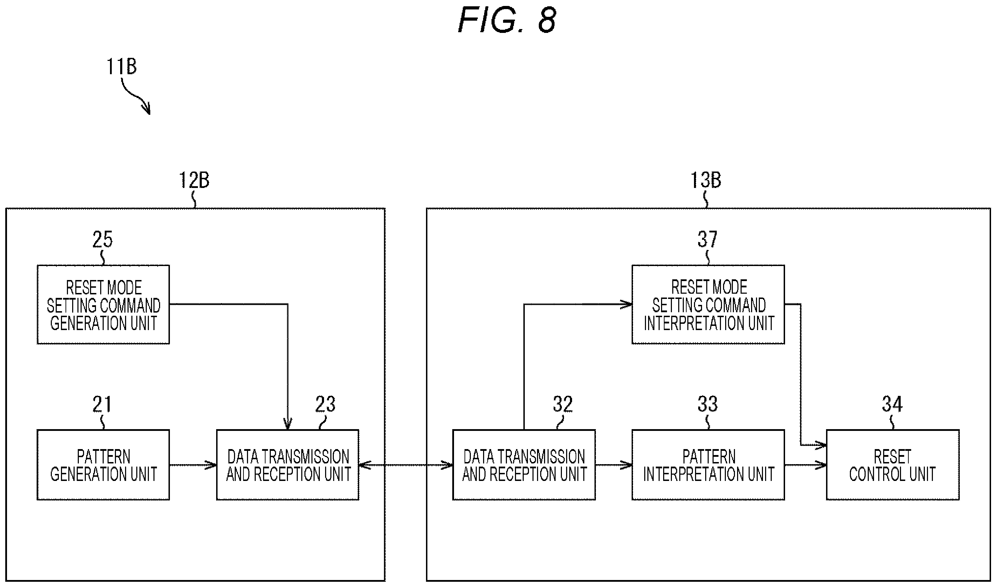

Fig. 8 is a block diagram illustrating a configuration example of a third embodiment of the communication system to which the present technology is applied. Note that, in a communication system 11B illustrated in Fig. 8, components common to those of the communication system 11 in Fig. 1 are denoted by the same reference numerals, and a detailed description thereof will be omitted.

As illustrated in Fig. 8, the communication system 11B includes a controller device 12B and a target device 13B, the controller device 12B and the target device 13B being connected through a data communication line.

Similarly to the controller device 12 in Fig. 1, the controller device 12B includes the pattern generation unit 22 and the data transmission and reception unit 23, and further includes a reset mode setting command generation unit 25. Similarly to the target device 13 in Fig. 1, the target device 13B includes the data transmission and reception unit 32, the pattern interpretation unit 33, and the reset control unit 34, and further includes a reset mode setting command interpretation unit 37.

The reset mode setting command generation unit 25 generates, as necessary, data indicating a reset state maintenance command that instructs maintenance of the reset state of the target device 13B as a reset mode setting for the target device 13B, and supplies the data to the data transmission and reception unit 23.

As described above, in I3C, a reset action command (RSTACT CCC) that instructs various reset operations is used, and a reset operation is specified by the value of the defining byte (see Fig. 6) of the reset action command. For example, in a case where the target device 13B is instructed to maintain the reset state, the value of the defining byte of the reset action command can be defined as 0x40. Therefore, the reset mode setting command generation unit 25 generates, as the reset state maintenance command, a reset action command having 0x40 set as the value of the defining byte, and supplies the data to the data transmission and reception unit 23. Then, the data indicating the reset state maintenance command is transmitted to the target device 13B via the data transmission and reception unit 23, received by the data transmission and reception unit 32, and supplied to the reset mode setting command interpretation unit 37.

For example, in a case where the target device 13B is instructed to release the reset state, the value of the defining byte of the reset action command can be defined as 0x50. Therefore, the reset mode setting command generation unit 25 generates, as a reset state release command, a reset action command having 0x50 set as the value of the defining byte, and supplies the data to the data transmission and reception unit 23. Then, the data indicating the reset state release command is transmitted to the target device 13B via the data transmission and reception unit 23, received by the data transmission and reception unit 32, and supplied to the reset mode setting command interpretation unit 37.

The reset mode setting command interpretation unit 37 interprets the data supplied from the data transmission and reception unit 32. For example, in a case where the reset mode setting command interpretation unit 37 interprets the data supplied from the data transmission and reception unit 32 as the reset action command, the reset mode setting command interpretation unit 37 notifies the reset control unit 34 that the reset action command has been received. Moreover, in a case where the defining byte of the reset action command indicates 0x40, that is, in a case where the reset action command is the reset state maintenance command, the reset mode setting command interpretation unit 37 notifies the reset control unit 34 that the reset action command is the reset state maintenance command. Furthermore, in a case where the defining byte of the reset action command indicates 0x50, that is, in a case where the reset action command is the reset state release command, the reset mode setting command interpretation unit 37 notifies the reset control unit 34 that the reset action command is the reset state release command.

The reset control unit 34 performs control related to the maintenance of the reset state of the target device 13B on the basis of the reset release instruction from the pattern interpretation unit 33 and the notification (the notification of reception of the reset action command and the notification of reset state maintenance command) from the reset mode setting command interpretation unit 37.

For example, in a case where the target reset pattern has been received subsequent to the reception of the reset action command, and the reset action command is the reset state maintenance command, the reset control unit 34 can put the target device 13B into the reset state. Then, with the target device 13B in the reset state, when the target reset pattern is transmitted from the controller device 12B, that is, according to the reset release timing determined by the controller device 12B, the reset state of the target device 13B can be released.

The communication system 11B is configured as described above, and can improve noise resistance in a manner similar to the communication system 11A, and the reset state of the target device 13B can be released according to the reset release timing determined by the controller device 12B.

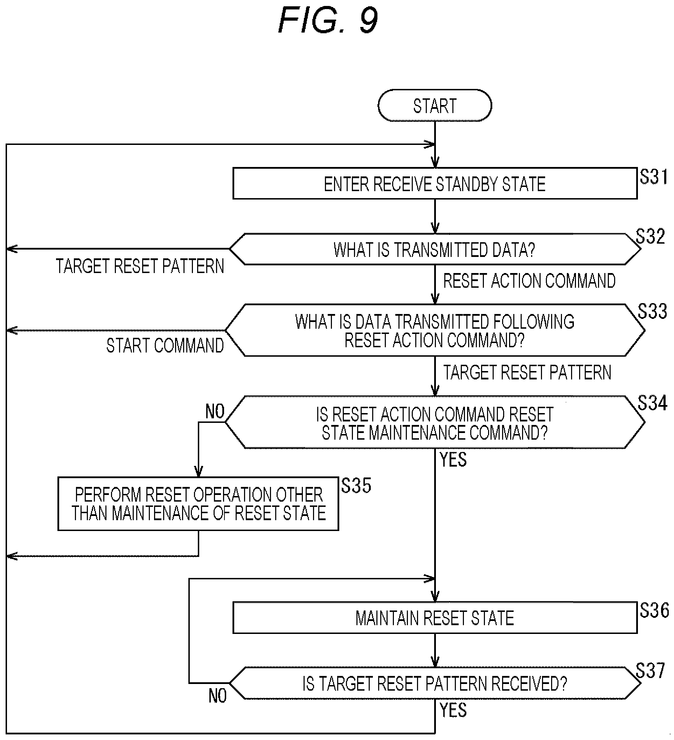

A first processing example of the reset state control processing that is performed by the target device 13B in Fig. 8 will be described with reference to the flowchart illustrated in Fig. 9.

For example, the reset state control processing is performed after the above-described reset release processing (Fig. 4 or Fig. 7) is performed to enable communication in accordance with the I3C specifications, and in step S31, enters the receive standby state to wait for data to be transmitted from the controller device 12B. Then, when the data transmission and reception unit 32 receives the data transmitted from the controller device 12B and supplies the data to the pattern interpretation unit 33 and the reset mode setting command interpretation unit 37, the processing proceeds to step S32.

In step S32, the reset control unit 34 determines whether the data transmitted from the controller device 12B is the target reset pattern or the reset action command. For example, in response to the notification of the reception of the target reset pattern from the pattern interpretation unit 33, the reset control unit 34 can determine that the data transmitted from the controller device 12B is the target reset pattern. Furthermore, in response to the notification of the reception of the reset action command from the reset mode setting command interpretation unit 37, the reset control unit 34 can determine that the data transmitted from the controller device 12B is the reset action command.

In step S32, in a case where the reset control unit 34 determines that the data transmitted from the controller device 12B is the target reset pattern, the processing returns to step S31 to enter the receive standby state, and subsequently, similar processing is repeated. That is, in this case, the receive standby state is maintained without performing the reset release.

On the other hand, in step S32, in a case where the reset control unit 34 determines that the data transmitted from the controller device 12B is the reset action command, the processing proceeds to step S33.

In step S33, the reset control unit 34 determines whether the data transmitted from the controller device 12B following the reset action command is the start command or the target reset pattern.

In step S33, in a case where the reset control unit 34 determines that the data transmitted from the controller device 12B following the reset action command is the start command, the processing returns to step S31 to enter the receive standby state, and subsequently, similar processing is repeated. That is, in this case, the receive standby state is maintained without performing the reset release.

On the other hand, in step S33, in a case where the reset control unit 34 determines that the data transmitted from the controller device 12B following the reset action command is the target reset pattern, the processing proceeds to step S34.

In step S34, the reset control unit 34 determines whether or not the reset action command is the reset state maintenance command. For example, in a case where the reset action command is the reset state maintenance command, that is, in a case where the defining byte of the reset action command indicates 0x40, the reset mode setting command interpretation unit 37 notifies the reset control unit 34 that the reset action command is the reset state maintenance command, allowing the reset control unit 34 to determine that the reset action command is the reset state maintenance command.

In step S34, in a case where the reset control unit 34 determines that the reset action command is not the reset state maintenance command, the processing proceeds to step S35.

In step S35, the reset control unit 34 performs a reset operation instructed by the reset action command transmitted from the controller device 12B, that is, a reset operation other than the reset operation to maintain the reset state of the target device 13B. Subsequently, the processing returns to step S31 to enter the receive standby state, and subsequently, similar processing is repeated.

On the other hand, in step S34, in a case where the reset control unit 34 determines that the reset action command is the reset state maintenance command, the processing proceeds to step S36.

In step S36, the reset control unit 34 maintains the reset state of the target device 13B in accordance with the reset state maintenance command.

In step S37, the pattern interpretation unit 33 interprets the data supplied from the data transmission and reception unit 32, and determines whether or not the target reset pattern that instructs the target device 13B maintaining the reset state to perform the reset release on the basis of timing determined by the controller device 12B has been received.

In step S37, in a case where the pattern interpretation unit 33 determines that the target reset pattern has not been received, the processing returns to step S36, and the reset state of the target device 13B is maintained.

On the other hand, in step S37, in a case where the pattern interpretation unit 33 determines that the target reset pattern has been received, the pattern interpretation unit 33 instructs the reset control unit 34 to perform the reset release. Then, after the reset control unit 34 performs control to release the reset of the circuits included in the digital block of the target device 13B, the processing returns to step S31 to enter the receive standby state, and subsequently, similar processing is repeated.

As described above, the first processing example of the reset state control processing allows for an improvement of noise resistance and allows the target device 13B to maintain the reset state.

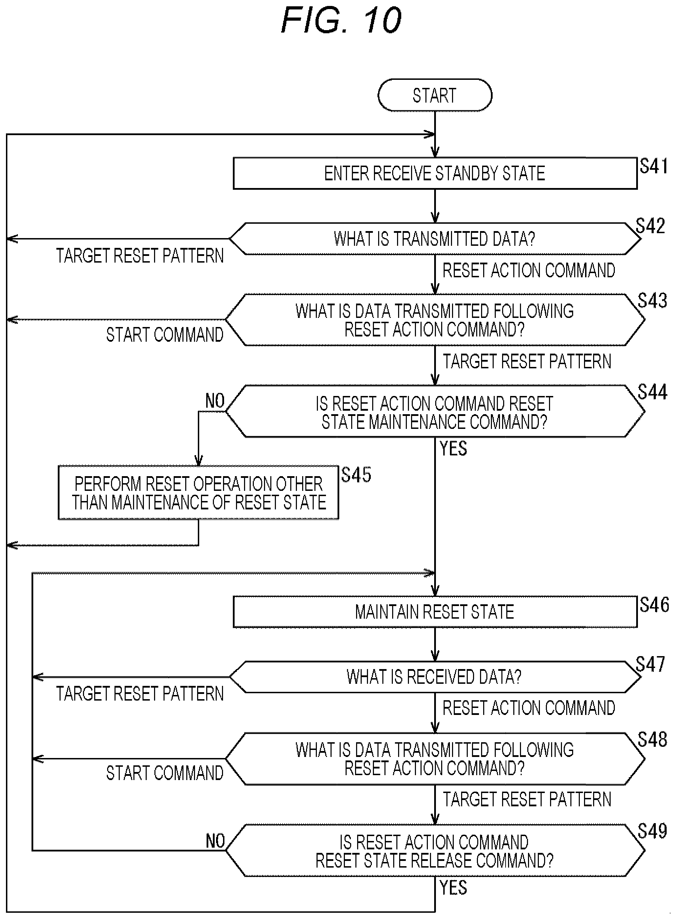

A second processing example of the reset state control processing that is performed by the target device 13B in Fig. 8 will be described with reference to the flowchart illustrated in Fig. 10.

In steps S41 to S46, processes similar to steps S31 to S36 in Fig. 9 are performed to maintain the reset state of the target device 13B. Then, when the data transmission and reception unit 32 receives the data transmitted from the controller device 12 and supplies the data to the pattern interpretation unit 33 and the reset mode setting command interpretation unit 37, the processing proceeds to step S47.

In step S47, the reset control unit 34 determines whether the data transmitted from the controller device 12 is the target reset pattern or the reset action command.

In step S47, in a case where the reset control unit 34 determines that the data transmitted from the controller device 12 is the target reset pattern, the processing returns to step S46 to maintain the reset state of the target device 13B, and subsequently, similar processing is repeated.

On the other hand, in step S47, in a case where the reset control unit 34 determines that the data transmitted from the controller device 12 is the reset action command, the processing proceeds to step S48.

In step S48, the reset control unit 34 determines whether the data transmitted from the controller device 12 is the start command or the target reset pattern.

In step S48, in a case where the reset control unit 34 determines that the data transmitted from the controller device 12 is the start command, the processing returns to step S46 to maintain the reset state of the target device 13B, and subsequently, similar processing is repeated.

On the other hand, in step S48, in a case where the reset control unit 34 determines that the data transmitted from the controller device 12 is the target reset pattern, the processing proceeds to step S49.

In step S49, the reset control unit 34 determines whether or not the reset action command is the reset state release command. For example, in a case where the reset action command is the reset state release command, that is, in a case where the defining byte of the reset action command indicates 0x50, the reset mode setting command interpretation unit 37 notifies the reset control unit 34 that the reset action command is the reset state release command, allowing the reset control unit 34 to determine that the reset action command is the reset state release command.

In step S49, in a case where the reset control unit 34 determines that the reset action command is not the reset state release command, the processing returns to step S46 to maintain the reset state of the target device 13B, and subsequently, the similar processing is repeated.

On the other hand, in step S49, in a case where the reset control unit 34 determines that the reset action command is the reset state release command, the reset control unit 34 releases the reset state of the target device 13B. Thereafter, the processing returns to step S41 to enter the receive standby state, and subsequently, similar processing is repeated.

As described above, the second processing example of the reset state control processing allows for a further improvement of noise resistance and allows the target device 13B to maintain the reset state.

### <Fourth configuration example of communication system>

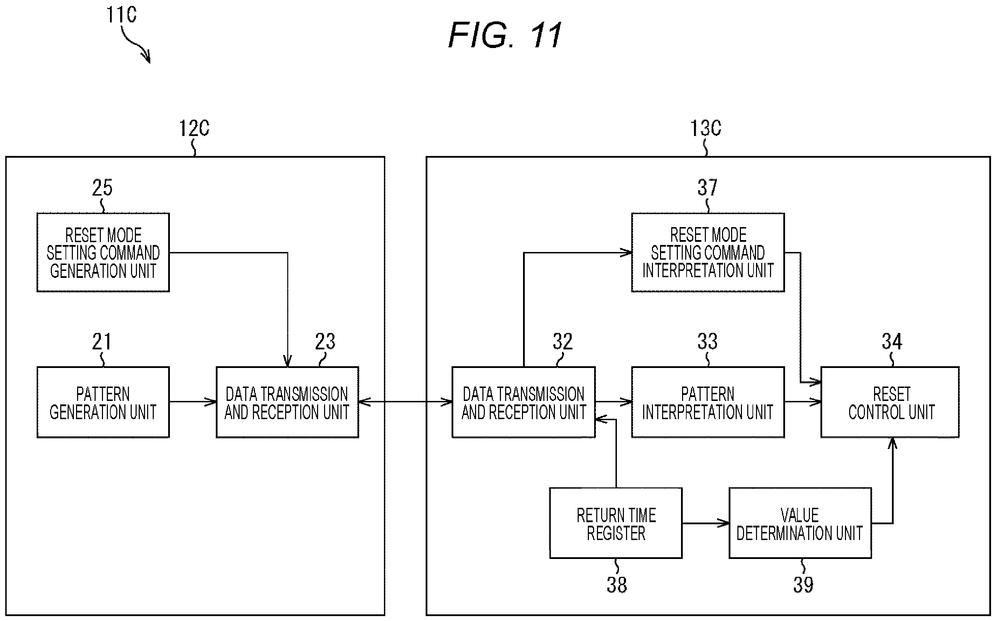

Fig. 11 is a block diagram illustrating a configuration example of a fourth embodiment of the communication system to which the present technology is applied. Note that, in a communication system 11C illustrated in Fig. 11, components common to those of the communication system 11B in Fig. 8 are denoted by the same reference numerals, and a detailed description thereof will be omitted.

As illustrated in Fig. 11, the communication system 11C includes a controller device 12C and a target device 13C, the controller device 12C and the target device 13C being connected through a data communication line.

Similarly to the controller device 12B in Fig. 8, the controller device 12C includes the pattern generation unit 22, the data transmission and reception unit 23, the reset mode setting command generation unit 25. Similarly to the target device 13B in Fig. 8, the target device 13C includes the data transmission and reception unit 32, the pattern interpretation unit 33, the reset control unit 34, and the reset mode setting command interpretation unit 37, and further includes a return time register 38 and a value determination unit 39.

The return time register 38 stores a return time (return time from Whole Reset (the reset of the whole target device 13C) with the value of the defining byte of the reset action command (RSTACT SET) set to 0x02 to the return of the target device 13C) set for the target device 13C. Note that the data stored in the return time register 38 can be set on the basis of, for example, one time programmable (OTP).

For example, in I3C, a reset action command (RSTACT GET) that instructs notification to the controller device 12C of the return time of the target device 13C is used, and the value of the defining byte of the reset action command is defined as 0x80. Therefore, in a case where the reset mode setting command interpretation unit 37 interprets the value of the defining byte of the reset action command (RSTACT GET) as 0x80, the data transmission and reception unit 32 reads the return time of the target device 13C from the return time register 38, and transmits data associated with the return time to the controller device 12C.

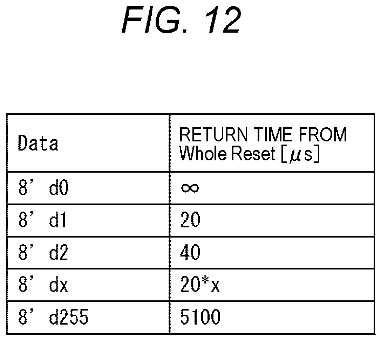

For example, the data associated with the return time of the target device 13C can be defined as illustrated in Fig. 12. Therefore, the data transmission and reception unit 32 transmits data indicating 8'd0 in a case where the return time of the target device 13C is set to infinity, transmits data indicating 8'd1 in a case where the return time of the target device 13 C is set to 20 µS, and transmits data indicating 8'd2 in a case where the return time of the target device 13 C is set to 40 µS. Similarly, the data transmission and reception unit 32 transmits data indicating 8'dx in a case where the return time of the target device 13C is set to x times 20 µS (20 * x), and transmits data indicating 8'd255 in a case where the return time of the target device 13C is set to 5100 µS.

When the reset state maintenance command is transmitted from the controller device 12C, the value determination unit 39 refers to the return time register 38 and determines whether or not the return time of the target device 13C is set to infinity. Then, in a case where the return time of the target device 13C is set to infinity, the value determination unit 39 notifies the reset control unit 34 that the return time of the target device 13C is set to infinity. In this case, in a case where the target reset pattern has been received subsequent to the reception of the reset action command, and the reset action command is the reset state release command, the reset control unit 34 can put the target device 13C into the reset state.

Furthermore, in a case where the return time of the target device 13C is not set to infinity, the value determination unit 39 notifies the reset control unit 34 of the return time of the target device 13C. In this case, the reset control unit 34 performs control to automatically release the reset state of the target device 13C within the return time given from the value determination unit 39.

In the communication system 11C configured as described above, with respect to the reset action command (RSTACT GET) that instructs notification of the return time of the target device 13C to the controller device 12C, it is possible to indicate to the controller device 12C which of the following two types of operations is performed when the target device 13C receives the target reset pattern subsequent to the reception of the reset release permission command (Defining Byte = 0x02) on the basis of the data of the return time that the target device 13C notifies the controller device 12C.

That is, in a case where the data of the return time is 8'd0, when the target device 13C maintains the reset state, the reset state of the target device 13C is released in response to the reception of the target reset pattern. That is, when 8'd0 is transmitted as the data of the return time from the target device 13C, the controller device 12C recognizes that the target device 13C maintains the reset state in a case where Whole Reset is performed. On the other hand, in a case where the data of the return time is other than 8'd0, the reset state of the target device 13C is automatically released within the return time based on each data.

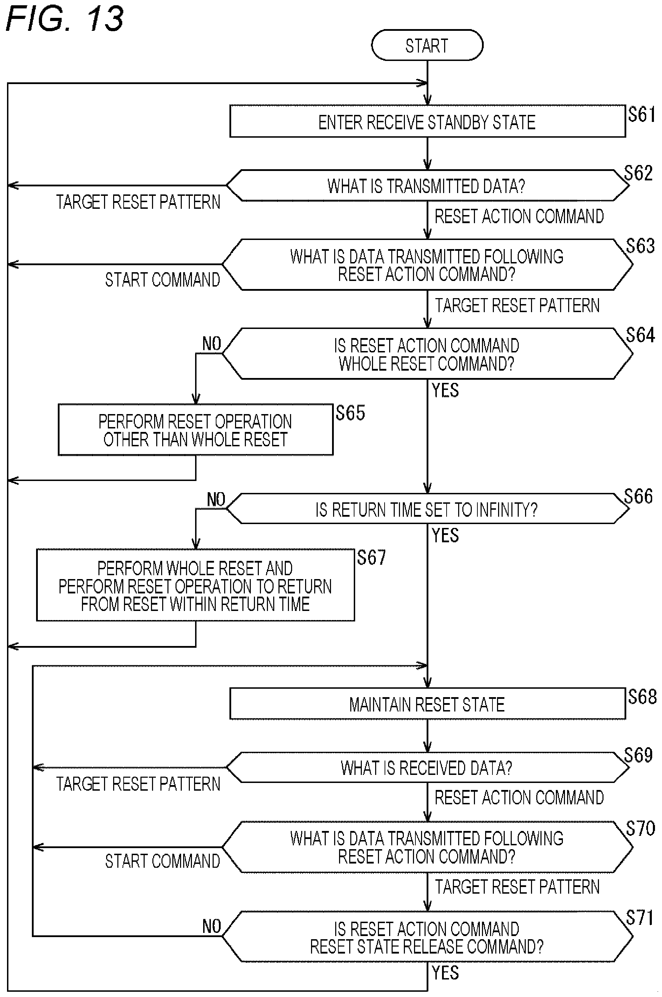

A processing example of the reset state control processing that is performed by the target device 13C in Fig. 11 will be described with reference to the flowchart illustrated in Fig. 13.

In steps S61 to S63, processes similar to steps S31 to 33 in Fig. 9 are performed, and in step S64, the reset control unit 34 determines whether or not the reset action command is a reset command that instructs the reset (Whole Reset) of the whole target device 13C (that is, the value of the defining byte of the reset action command (RSTACT SET) is set to 0x02).

In step S64, in a case where the reset control unit 34 determines that the reset action command is not the reset command that instructs the reset of the whole target device 13C, the processing proceeds to step S65.

In step S65, the reset control unit 34 performs a reset operation instructed by the reset action command transmitted from the controller device 12C, that is, a reset operation other than the reset operation to reset the whole target device 13C. Thereafter, the processing returns to step S61 to enter the receive standby state, and subsequently, similar processing is repeated.

On the other hand, in step S64, in a case where the reset control unit 34 determines that the reset action command is the reset command that instructs the reset of the whole target device 13C, the processing proceeds to step S66.

In step S66, the value determination unit 39 refers to the return time register 38 to determine whether or not the return time of the target device 13C is set to infinity.

In step S66, in a case where the value determination unit 39 determines that the return time of the target device 13C is not set to infinity, the processing proceeds to step S67.

In step S67, the value determination unit 39 reads the return time of the target device 13C stored in the return time register 38, and supplies the return time to the reset control unit 34. Then, after the reset control unit 34 resets the whole target device 13C and performs a reset operation to return from the reset within the return time, the processing returns to step S61 to enter the receive standby state, and subsequently, similar processing is repeated.

On the other hand, in step S66, in a case where the value determination unit 39 determines that the return time of the target device 13C is set to infinity, the reset control unit 34 performs a reset operation to reset the whole target device 13C, and the processing proceeds to step S68.

Thereafter, in steps S68 to S71, processes similar to steps S46 to S49 in Fig. 10 are performed.

As described above, the communication system 11C always requires a setting based on the reset action command when performing the reset operation of the target device 13C, which allows for an improvement of noise resistance. Moreover, the communication system 11C can achieve, by using the reset state maintenance command that instructs the maintenance of the reset state of the target device 13B, control using the target reset pattern, the control being similar to the control with the conventional Reset line, for example.

### <Configuration example of computer>

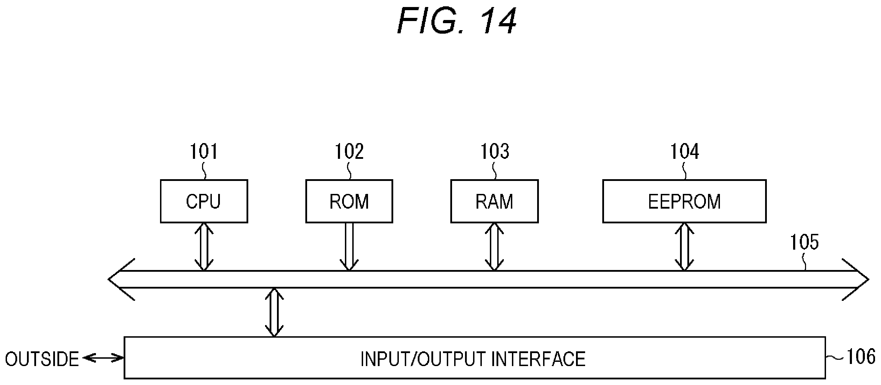

Fig. 14 is a block diagram illustrating a configuration example of hardware of a computer that performs the above-described series of processing (communication method) in accordance with a program.

In the computer, a central processing unit (CPU) 101, a read only memory (ROM) 102, a random access memory (RAM) 103, and an electronically erasable and programmable read only memory (EEPROM) 104 are connected to each other through a bus 105. The bus 105 is further connected with an input/output interface 106, and the input/output interface 106 is connected to the outside.

In the computer configured as described above, the CPU 101 executes a program loaded from the ROM 102 and the EEPROM 104 into the RAM 103 through the bus 105 to perform the above-described series of processing. Furthermore, the program to be executed by the computer (CPU101) can be written in advance to the ROM 102, or can be installed or updated into the EEPROM 104 from the outside via the input/output interface 106.

Herein, the processing to be performed by the computer in accordance with the program does not necessarily have to be performed in the time-series order described as the flowcharts. In other words, the processing to be performed by the computer in accordance with the program includes processing to be performed in parallel or independently (e.g., parallel processing or object-oriented processing).

Furthermore, the program may correspond to processing to be performed by a single computer (processor) or processing to be performed in a distributed manner by a plurality of computers. Moreover, the program may be transferred to a distant computer to be performed.

Moreover, herein, a system means a set of a plurality of components (devices, modules (parts), and the like), and it does not matter whether or not all the components are in the same housing. Therefore, a plurality of devices housed in separate housings and connected to each other through a network and a single device including a plurality of modules housed in a single housing are both systems.

Furthermore, for example, the configuration described as a single device (or processing unit) may be divided into and configured as a plurality of devices (or processing units). Conversely, the configurations described above as a plurality of devices (or processing units) may be collectively configured as a single device (or processing unit). Furthermore, it goes without saying that a configuration other than the above-described configurations may be added to the configuration of each device (or each processing unit). Moreover, as long as the configuration and operation of the entire system are substantially the same, a part of the configuration of a certain device (or processing unit) may be included in the configuration of another device (or another processing unit).

Furthermore, for example, the present technology can be configured as cloud computing in which each function is shared for joint processing by a plurality of devices through a network.

Furthermore, for example, the program described above can be executed by any desired device. In this case, the device is only required to have a necessary function (functional block or the like) and obtain necessary information.

Furthermore, for example, each step of the flowcharts described above can be performed by a single device, or can be performed by a plurality of devices in a shared manner. Moreover, in a case where a single step includes a plurality of processes, the plurality of processes included in the single step can be performed by a single device or performed by a plurality of devices in a shared manner. In other words, the plurality of processes included in the single step can also be performed as processes of a plurality of steps. Conversely, the processes described as a plurality of steps can also be collectively performed as a single step.

Note that, in the program to be executed by the computer, the processes of steps for describing the program may be performed in time-series order described herein, or may be performed in parallel, or independently at a necessary timing such as when a call is made. That is, as long as there is no contradiction, the process of each step may be performed in a different order from the above-described order. Moreover, the processes of steps for describing the program may be performed in parallel with processes of another program, or may be performed in combination with processes of the other program.

Note that the plurality of present technologies that has been described herein can each be implemented independently as a single unit as long as there is no contradiction. It goes without saying that any plurality of present technologies can be implemented in combination. For example, some or all of the present technologies described in any of the embodiments can be implemented in combination with some or all of the present technologies described in other embodiments. Furthermore, some or all of any of the above-described present technologies can be implemented together with another technology that is not described above.

### <Combination example of configuration>

Note that the present technology may also have the following configurations.
(1) A communication system including:
   a controller device that manages communication in the communication system; and
   a target device that performs communication under the management of the controller device, in which
   the target device includes:
      a pattern interpretation unit that determines whether or not a target reset pattern has been received, the target reset pattern being transmitted from the controller device through a data communication line and instructing first reset release after the target device is powered on; and
      a reset control unit that performs control to release a reset state of the target device in a case where the target reset pattern is determined to have been received.
(2) The communication system according to the above (1), in which
   the controller device further includes a pattern generation unit that generates the target reset pattern and transmits the target reset pattern to the target device through the data communication line.
(3) The communication system according to the above (1) or (2), in which
   the target device further includes a power-on detection unit that detects power-on of the target device and performs initialization of the pattern interpretation unit.
(4) The communication system according to any one of the above (1) to (3), in which
   the data communication line connecting the controller device and the target device includes only a Bus line and a Clock line.
(5) The communication system according to any one of the above (1) to (3), in which
   the controller device and the target device perform communication in accordance with improved inter integrated circuits (I3C) specifications, and
   the data communication line connecting the controller device and the target device includes only an SCL line, an SDA line, and a Clock line.
(6) The communication system according to any one of the above (2) to (5), in which
   the controller device further includes a reset release permission command generation unit that generates a reset release permission command that instructs permission of the first reset release after the target device is powered on, and
   the target device further includes:
      a reset release permission command interpretation unit that determines whether or not the reset release permission command has been received; and
      a reset determination processing unit that instructs the reset control unit to perform reset release in a case where the reset release permission command is determined to have been received and subsequently the target reset pattern is determined to have been received.
(7) The communication system according to any one of the above (2) to (5), in which
   the controller device further includes a reset mode setting command generation unit that generates a reset state maintenance command that instructs maintenance of the reset state of the target device as a reset mode setting for the target device, and causes the reset state maintenance command to be transmitted to the target device through the data communication line,
   the target device further includes a reset mode setting command interpretation unit that determines whether or not the reset state maintenance command has been received, and
   the reset control unit performs control to put the target device into the reset state in a case where the reset state maintenance command is determined to have been received and subsequently the target reset pattern is determined to have been received.
(8) The communication system according to the above (7), in which
   the reset control unit performs control to release the reset state of the target device in a case where the target reset pattern is determined to have been received with the target device in the reset state.
(9) The communication system according to the above (7) or (8), in which
   the reset mode setting command generation unit generates a reset state release command that instructs release of the reset state of the target device and causes the reset state release command to be transmitted to the target device through the data communication line,
   the reset mode setting command interpretation unit determines whether or not the reset state release command has been received, and
   the reset control unit performs control to release the reset state of the target device in a case where the reset state release command is determined to have been received and subsequently the target reset pattern is determined to have been received with the target device in the reset state.
(10) The communication system according to any one of the above (7) to (9), in which
   the target device further includes:
   a return time register that stores a return time set for the target device; and
   a value determination unit that determines whether or not the return time stored in the return time register is set to infinity.
(11) The communication system according to the above (10), in which
   when a command that instructs notification of the return time is transmitted from the controller device, the target device reads the return time from the return time register and transmits the return time to the controller device.
(12) The communication system according to the above (11), in which
   with the return time set to infinity and the target device maintaining the reset state, the reset control unit performs control to release the reset state of the target device in a case where a reset state release command that instructs release of the reset state of the target device is determined to have been received and subsequently the target reset pattern is determined to have been received.
(13) The communication system according to the above (11), in which
   in a case where the return time is set to a value other than infinity, the reset control unit performs control to return from reset within the return time after resetting a whole of the target device.
(14) A communication method performed by a communication system including a controller device that manages communication in the communication system, and a target device that performs communication under the management of the controller device, the communication method including:
   determining whether or not a target reset pattern has been received, the target reset pattern being transmitted from the controller device through a data communication line and instructing first reset release after the target device is powered on; and
   performing control to release a reset state of the target device in a case where the target reset pattern is determined to have been received.
(15) A program causing a computer of a communication system including a controller device that manages communication in the communication system, and a target device that performs communication under the management of the controller device to perform processing, the processing including:
   determining whether or not a target reset pattern has been received, the target reset pattern being transmitted from the controller device through a data communication line and instructing first reset release after the target device is powered on; and
   performing control to release a reset state of the target device in a case where the target reset pattern is determined to have been received.

Note that the present embodiment is not limited to the embodiments described above, and various modifications can be made without departing from the gist of the present disclosure. Furthermore, the effects described herein are merely examples and are not restrictive, and there may be other effects.

### REFERENCE SIGNS LIST

- 11: Communication system
- 12: Controller device
- 13: Target device
- 21: Power signal transmission unit
- 22: Pattern generation unit
- 23: Data transmission and reception unit
- 24: Reset release permission command generation unit
- 25: Reset mode setting command generation unit
- 31: Power control unit
- 32: Data transmission and reception unit
- 33: Pattern interpretation unit
- 34: Reset control unit
- 35: Reset release permission command interpretation unit
- 36: Reset determination processing unit
- 37: Reset mode setting command interpretation unit
- 38: Return time register
- 39: Value determination unit
- 41: Power-on detection unit
- 51: Analog block
- 52: Digital block
- 53: Bus interpretation unit
- 54 and 55: Other circuits
- 56: I3C interpretation unit

## Claims

1. A communication system comprising:
a controller device that manages communication in the communication system; and
a target device that performs communication under the management of the controller device, wherein
the target device includes:
a pattern interpretation unit that determines whether or not a target reset pattern has been received, the target reset pattern being transmitted from the controller device through a data communication line and instructing first reset release after the target device is powered on; and
a reset control unit that performs control to release a reset state of the target device in a case where the target reset pattern is determined to have been received.

2. The communication system according to claim 1, wherein
the controller device further includes a pattern generation unit that generates the target reset pattern and transmits the target reset pattern to the target device through the data communication line.

3. The communication system according to claim 1, wherein
the target device further includes a power-on detection unit that detects power-on of the target device and performs initialization of the pattern interpretation unit.

4. The communication system according to claim 1, wherein
the data communication line connecting the controller device and the target device includes only a Bus line and a Clock line.

5. The communication system according to claim 1, wherein
the controller device and the target device perform communication in accordance with improved inter integrated circuits (I3C) specifications, and
the data communication line connecting the controller device and the target device includes only an SCL line, an SDA line, and a Clock line.

6. The communication system according to claim 2, wherein
the controller device further includes a reset release permission command generation unit that generates a reset release permission command that instructs permission of the first reset release after the target device is powered on, and
the target device further includes:
a reset release permission command interpretation unit that determines whether or not the reset release permission command has been received; and
a reset determination processing unit that instructs the reset control unit to perform reset release in a case where the reset release permission command is determined to have been received and subsequently the target reset pattern is determined to have been received.

7. The communication system according to claim 2, wherein
the controller device further includes a reset mode setting command generation unit that generates a reset state maintenance command that instructs maintenance of the reset state of the target device as a reset mode setting for the target device, and causes the reset state maintenance command to be transmitted to the target device through the data communication line,
the target device further includes a reset mode setting command interpretation unit that determines whether or not the reset state maintenance command has been received, and
the reset control unit performs control to put the target device into the reset state in a case where the reset state maintenance command is determined to have been received and subsequently the target reset pattern is determined to have been received.

8. The communication system according to claim 7, wherein
the reset control unit performs control to release the reset state of the target device in a case where the target reset pattern is determined to have been received with the target device in the reset state.

9. The communication system according to claim 7, wherein
the reset mode setting command generation unit generates a reset state release command that instructs release of the reset state of the target device and causes the reset state release command to be transmitted to the target device through the data communication line,
the reset mode setting command interpretation unit determines whether or not the reset state release command has been received, and
the reset control unit performs control to release the reset state of the target device in a case where the reset state release command is determined to have been received and subsequently the target reset pattern is determined to have been received with the target device in the reset state.

10. The communication system according to claim 7, wherein
the target device further includes:
a return time register that stores a return time set for the target device; and
a value determination unit that determines whether or not the return time stored in the return time register is set to infinity.

11. The communication system according to claim 10, wherein
when a command that instructs notification of the return time is transmitted from the controller device, the target device reads the return time from the return time register and transmits the return time to the controller device.

12. The communication system according to claim 11, wherein
with the return time set to infinity and the target device maintaining the reset state, the reset control unit performs control to release the reset state of the target device in a case where a reset state release command that instructs release of the reset state of the target device is determined to have been received and subsequently the target reset pattern is determined to have been received.

13. The communication system according to claim 11, wherein
in a case where the return time is set to a value other than infinity, the reset control unit performs control to return from reset within the return time after resetting a whole of the target device.

14. A communication method performed by a communication system including a controller device that manages communication in the communication system, and a target device that performs communication under the management of the controller device, the communication method comprising:
determining whether or not a target reset pattern has been received, the target reset pattern being transmitted from the controller device through a data communication line and instructing first reset release after the target device is powered on; and
performing control to release a reset state of the target device in a case where the target reset pattern is determined to have been received.

15. A program causing a computer of a communication system including a controller device that manages communication in the communication system, and a target device that performs communication under the management of the controller device to perform processing, the processing comprising:
determining whether or not a target reset pattern has been received, the target reset pattern being transmitted from the controller device through a data communication line and instructing first reset release after the target device is powered on; and
performing control to release a reset state of the target device in a case where the target reset pattern is determined to have been received.
